# EUROPEAN PATENT SPECIFICATION

(11) **EP 2 223 847 B1**
(45) Date of publication and mention of the grant of the patent: **16.11.2011**
(21) Application number: 10005852.8
(22) Date of filing: 11.01.2008
(51) Int. Cl.: B62K 3/00

(54) **Improved scooter**
Verbesserter roller
Trottinette améliorée

(30) Priority: 24.01.2007 GB 0701336
(43) Date of publication of application: 01.09.2010
(62) Divisional of application: 08701773.7
(73) Proprietor: H Grossman Limited, Rutherglen, Glasgow G73 1UB (GB)
(72) Inventor: Grossman, Martin, Rutherglen G73 1UB (GB)
(74) Representative: Moreland, David

(56) References cited:
- WO-A-98/46474
- WO-A-2004/083028
- GB-A- 2 410 931
- US-A1- 2002 030 339
- US-A1- 2002 105 158
- US-A1- 2003 007 352

## Description

### FIELD OF INVENTION

The present invention relates to an improved scooter or similar type self-propelled or foot-propelled vehicle or transport means. The invention particularly, though not exclusively, relates to a self-propelled or foot-propelled vehicle comprising a scooter incorporating a novelty illumination or lighting effect.

### BACKGROUND OF INVENTION

Scooters have undergone an upsurge in popularity in recent years because of innovations such as folding scooters and so-called "micro-scooters".

US 2002/0030339 A1 (POWERS) discloses a wheeled vehicle comprising a scooter (10) including a platform (12) mounted between a front wheel assembly (14) and a rear wheel assembly comprising rear fender (16). The scooter (10) may include a light on rear fender (16) (see Figure 9) that turns on and off depending on the pressure applied to the pedal (30).

It is an object of at least one embodiment of at least one aspect of the present invention to provide an improved scooter or the like.

It is an object of at least one embodiment of at least one aspect of the present invention to obviate and/or mitigate one or more disadvantages in the prior art.

It is an object of at least one embodiment of at least one aspect of the present invention to provide a scooter or the like having a novel or novelty light effect. By such provision, the scooter or the like may be more desirable to a user. Such provision may assist in making the user and his/her intentions (e.g. braking) more visible to others. This may contribute to improved safety for the user and others.

### SUMMARY OF INVENTION

According to a first aspect of the present invention there is provided a self-propelled or foot-propelled vehicle comprising a scooter, according to the appended claims.

The platform preferably, at least in use, may be provided between the at least one front wheel and at least one rear wheel, and preferably not extending rearward of the rear wheel, and preferably not extending forward of the front wheel.

Preferably the scooter has a brake member, preferably a rear brake member.

The brake member may be biased by biasing means to a non-braking position.

Preferably the brake member comprises a wheel arch or guard.

Preferably in a non-braking position or state there is a gap between the member and a rear wheel of the vehicle or scooter, while in a braking position or state the brake member frictionally contacts the rear wheel.

The brake member may, in use, be depressed into a braking position by a user applying their foot to the brake member. Removal of the user's foot from the brake member may cause the brake member to return to the non-braking position.

Movement of the brake member to the braking position and/or maintenance of the brake member at the braking position may cause the at least one light to switch on or illuminate.

Movement of the brake member from the braking position and/or maintenance of the brake member at the non-braking position may cause the at least one light to switch off or not illuminate.

The at least one light may comprise at least one electrically pcwered means such as a light emitting diodes (LED(s)). The light (s) may be of any colour - preferably red.

The at least one light may be mounted to be rear facing on the vehicle. For example (particularly where the vehicle is a scooter, e.g. microscooter), the at least one light may be provided on a rear portion of a/the platform of the vehicle/scooter.

The rear portion may comprise a rear facing surface(s) of the vehicle, e.g. of the platform.

The rear portion may be provided forward of the at least one rear wheel

The rear portion may be provided between the rear wheel and the front wheel.

The rear portion may be provided adjacent the rear wheel, e.g. adjacent side(s) of the rear wheel.

The rear portion may be provided below a level of a top surface or foot plate of the platform.

The rear portion may comprise at least part of a rear side of the platform. This arrangement provides particular advantage in simplicity of construction and robustness, in use.

The at least one light may comprise at least one illumination means on a left hand side rear portion of the vehicle/scooter/platform and at least one illumination means on a right hand side rear portion of the vehicle/scooter/platform. The left and right hand side rear portions may be provided adjacent to either side of the rear wheel.

The vehicle may comprise electronic means activated by movement of the brake member.

The electronic means may comprise a switch means having a switch member biased into contact with the brake member.

Preferably by this arrangement when the brake member is in the non-braking position, the switch member is in a first or retracted position, and the switch means is in an "off" state, while when the brake member is in the braking position the switch member is in a second or extended position, and the switch means is in an "on" state.

The electronic means may comprise circuit means, including, for example, one or more batteries, and the at least one light.

The batteries may be provided in a compartment below the platform of the scooter, e.g. within an elongate slot therein.

The electronic means/compartment may include an on/off switch for the electronic means.

The at least one brake light may be provided forward of a rearmost portion of the rear wheel(s).

Most preferably the at least one brake light may be provided forward of a foremost portion of the rear wheel(s). The platform may be made from a metallic material, e.g. aluminium, which may be extruded.

According to a second aspect of the present invention there is provided a scooter such as a microscooter comprising a foot operated rear brake and at least one brake light operable by operation of the rear brake.

According to a second aspect of the present invention there is provided a platform adapted for use in a self-propelled or foot-propelled vehicle according to the first aspect of the present invention.

### BRIEF DESCRIPTION OF DRAWINGS

An embodiment of the invention will now be described by way of example only, and with reference to the accompanying drawings, which are:
- **Figure 1**: a side view of a scooter according to an embodiment of the present invention in a first (collapsed) state;
- **Figure 2**: a side view of the scooter of Figure 1 in a second (erected) state;
- **Figure 3**: a side view of the scooter of Figure 1 in an erected state with a rear brake thereof deployed and a rear brake light thereof illuminated;
- **Figure** 4: a close up side view of the rear of the scooter of Figure 1 with a rear brake deployed and rear brake light thereof illuminated;
- **Figure 5**: a partial rear view of the scooter of Figure 1:
- **Figure 6**: a view from below of the scooter of Figure 1;
- **Figure 7**: a close up view from the other side of the scooter of Figure 1 with the rear brake deployed and rear brake light illuminated; and

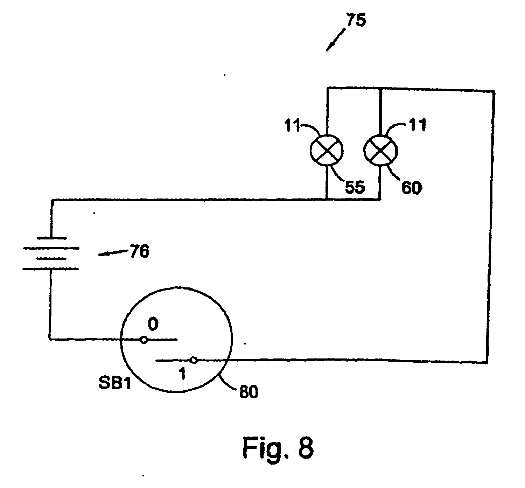

- **Figure 8**: a circuit diagram of circuitry of the scooter of Figure 1.

### DETAILED DESCRIPTION OF DRAWINGS

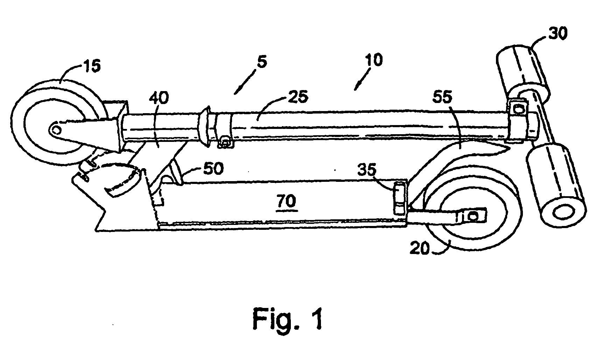

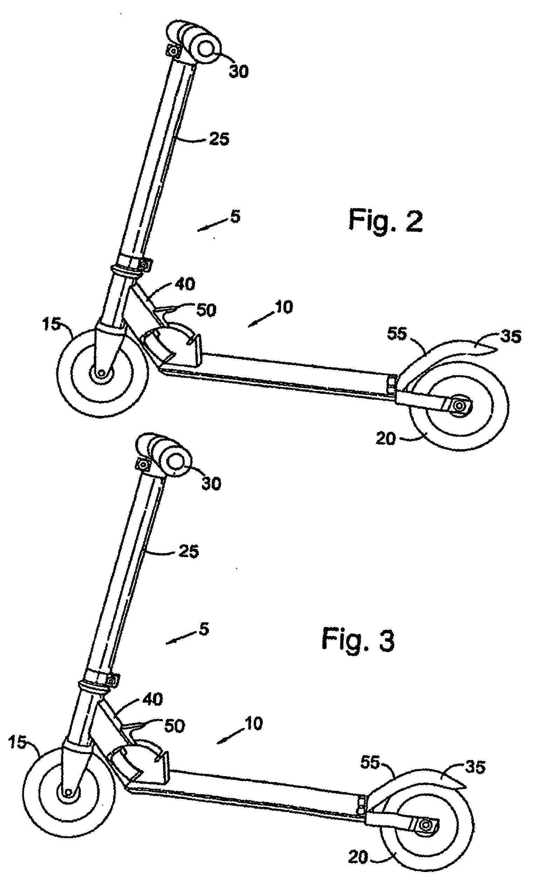

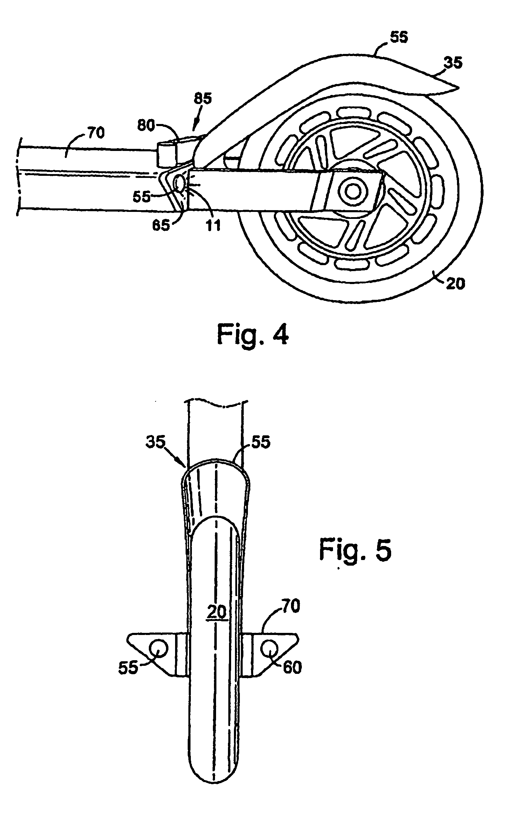

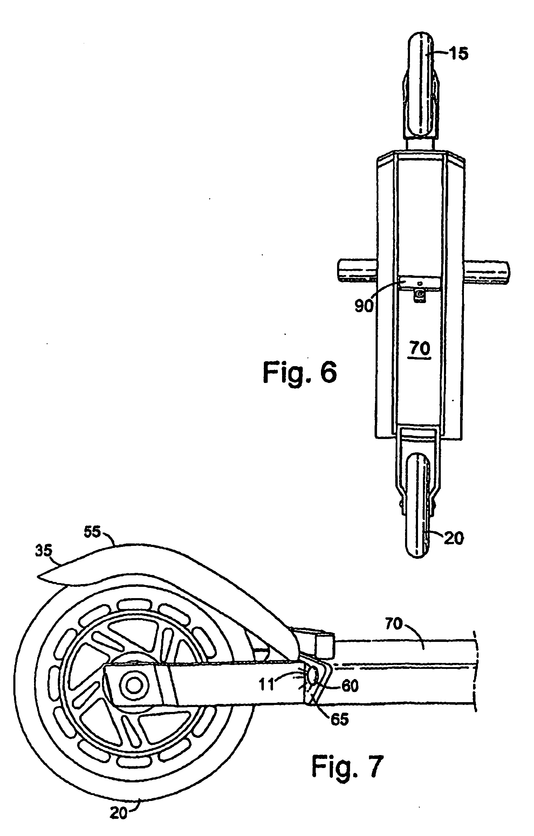

Referring to Figures 1 to 7 there is shown a self-propelled or foot-propelled vehicle, generally designated 5, according to an embodiment of the present invention. The vehicle 5 comprises at least one brake light or illumination means 11 as will be described hereinafter in greater detail.

In this embodiment the vehicle 5 is a scooter 10, particularly a collapsible scooter or so-called "microscooter". The scooter 10 has first and second (front and rear) wheels 15,20, steering column 25, handlebars 30, and a brake member 35, as well as hingeable locking mechanism 40 including lever 50.

It will be appreciated that the disclosed embodiment comprises a two wheeled scooter. However, in a modification there can be provided a front wheel 15 and a pair of rear wheels 20 coaxially disposed relative to one another. The vehicle 5 also comprises a foot plate or platform 70, at least in use, provided between the front wheel 15 rear wheels 20.

The scooter 10 has brake member 35, comprising a rear brake member 55. The brake member 35 is biased by biasing means (not shown), such as a spring, to a non-braking position. The brake member 35 comprises a wheel arch or guard.

In a non-braking position or state there is a gap between the member 35 and a rear wheel 20 of the scooter 10, while in a braking position or state the brake member 35 frictionally contacts the rear wheel 20.

The brake member 35, in use, is depressed into a braking position by a user normally by applying their foot to the brake member 35. Removal of the user's foot from the brake member 35 causes the brake member 35 to return to the non-braking position.

Movement of the rear brake 55 to the braking position and/or maintenance of the rear brake 55 at the braking position causes the at least one brake light 11 to illuminate.

Movement of the brake member 35 from the braking position and/or maintenance of the brake member 35 at the non-braking position causes the at least one brake light 11 to not illuminate.

The at least one brake light comprises at least one light emitting diode (LED), and in this embodiment a pair of LEDs 55,60. The at least one brake light 11 is mounted to be rear facing on the vehicle 5. In this embodiment the at least one brake light 11 is provided on a rear facing portion 65 of the platform 70 of the scooter 10.

The rear facing portion 65 comprises a rear facing surface(s) of the vehicle 5, e.g. of the platform 70. The rear facing portion 65 is provided forward of the at least one rear wheel 20. The rear facing portion 65 is provided between the rear wheel 20 and the front wheel 15.

The rear facing portion 65 is provided adjacent the rear wheel, e.g. adjacent side(s) of the rear wheel 20.

As can be seen from various of the Figures, the rear facing portion 65 is provided below, i.e. extending downwardly from a top surface or foot plate of the platform 70. The rear facing portion 65 comprises at least part of a rear side of the platform 70.

The at least one brake light 11 comprises at least one illumination means on a left hand side rear portion of the platform 70 and at least one illumination means on a right hand side rear portion of the platform 70. The left and right hand side rear portions are provided adjacent to either side of the rear wheel 20 and rearward of an axle thereof.

The vehicle 5 comprises electronic means 75 activated by movement of the brake member 35. The electronic means 75 comprise a switch means 80 having a switch member 85 biased into contact with the brake member 35.

By this arrangement when the brake member 35 is in the non-braking position, the switch member 85 is in a first or retracted position, and the switch means 80 is in an "off" state, while when the brake member 35 is in the braking position the switch member 85 is in a second or extended position, and the switch means 80 is in an "on" state.

The electronic means 75 comprises circuit means, including, for example, one or more batteries 76, and the at least one brake light 11. The batteries are provided in a compartment 90 below the platform 20 of the scooter 10, e.g. within an elongate slot therein. The compartment 90 includes an on/off switch (not shown) for the electronic means.

The platform 70 is typically made from a metallic material, e.g. aluminium, which is advantageously lightweight and extrudable.

It will be appreciated that the embodiment of the invention hereinbefore described is given by way of example only and is not meant to limit the scope thereof in any way. It will be appreciated that various modifications may be envisaged to the disclosed embodiment without departing from the scope of the invention.

For example, it may be envisaged that the platform 70 may extend on one or both sides of the rear wheel 20 such that the rear facing portion(s) 65 is/are provided rearward of a foremost portion of the rear wheel and forward (or alternatively rearward) of a rearmost portion of the rear wheel.

Further, when the brake member is applied, the brake light(s) may be caused to illuminate constantly/statically or intermittently/flash.

Further illumination may be provided on the vehicle, e.g. on the wheels thereof. The wheels may be at least part transparent or translucent. The wheels may be semi white in finish.

## Claims

1. A self-propelled or foot-propelled vehicle (5) comprising a scooter, wherein the scooter comprises a platform or deck (70) and at least one light (11), **CHARACTERISED IN THAT:**
the at least one light is provided on a rear facing portion or end (65) of the platform,
the at least one light comprises at least one illumination means on a left hand side rear portion of the platform and at least one illumination means on a right hand side rear portion of the platform, and
the left and right hand side rear portions are provided adjacent to either side of a rear wheel of the scooter (20).

2. A vehicle as claimed in claim 1, wherein the at least one light is provided forward of a rearmost edge of a rear wheel of the vehicle.

3. A vehicle as claimed in claim 2, wherein the at least one light is provided forward of a foremost edge of the rear wheel.

4. A vehicle as claimed in any of claims 1 to 3, wherein the at least one light comprises a brake light.

5. A vehicle as claimed in any preceding claim, wherein the scooter is a collapsible scooter or microscooter.

6. A vehicle as claimed in any preceding claim, wherein the at least one light is mounted to be rear facing on the vehicle.

7. A vehicle as claimed in any preceding claim, wherein the rear facing portion comprises a rear facing surface of the platform.

8. A vehicle as claimed in any preceding claim, wherein the rear facing portion is provided forward of the rear wheel, and/or the rear facing portion is provided between the rear wheel and the front wheel, and/or the rear facing portion is provided adjacent the rear wheel.

9. A vehicle as claimed in any preceding claim, wherein the rear facing portion is provided below a level of a top surface or foot plate of the platform, and/or the rear facing portion comprises at least part of a rear side of the platform.

10. A vehicle as claimed in any preceding claim, wherein the at least one light comprises at least one light emitting diode (55,60).

## Patentansprüche

1. Fahrzeug mit Selbstantrieb oder Fußantrieb (5), umfassend einen Roller, wobei der Roller eine Plattform oder eine Tragfläche (70) und wenigstens ein Licht (11) umfasst, **dadurch gekennzeichnet, dass**:
das wenigstens eine Licht an einem nach hinten zeigenden Abschnitt oder einem hinteren Ende (65) der Plattform bereitgestellt wird;
das wenigstens eine Licht wenigstens ein Licht auf einem linksseitigen hinteren Abschnitt der Plattform, sowie wenigstens ein Beleuchtungsmittel auf einem rechtsseitigen hinteren Abschnitt der Plattform umfasst, und
dass der links- und der rechtsseitige hintere Abschnitt angrenzend an jede Seite eines Hinterrads des Rollers (20) bereitgestellt werden.

2. Fahrzeug nach Anspruch 1, wobei das wenigstens eine Licht vor einem hintersten Abschnitt eines Hinterrads des Fahrzeugs bereitgestellt wird.

3. Fahrzeug nach Anspruch 2, wobei das wenigstens eine Licht vor einem vordersten Abschnitt des Hinterrads bereitgestellt wird.

4. Fahrzeug nach einem der Ansprüche 1 bis 3, wobei das wenigstens eine Licht ein Bremslicht umfasst.

5. Fahrzeug nach einem der vorhergehenden Ansprüche, wobei der Roller ein zusammenklappbarer Roller oder Mikroroller ist.

6. Fahrzeug nach einem der vorhergehenden Ansprüche, wobei das wenigstens eine Licht so angebracht ist, dass es an dem Fahrzeug nach hinten zeigt.

7. Fahrzeug nach einem der vorhergehenden Ansprüche, wobei der nach hinten zeigende Abschnitt eine nach hinten zeigende Fläche der Plattform umfasst.

8. Fahrzeug nach einem der vorhergehenden Ansprüche, wobei der nach hinten zeigende Abschnitt vor dem Hinterrad bereitgestellt wird und/oder der nach hinten zeigende Abschnitt zwischen dem Hinterrad und dem Vorderrad bereitgestellt wird und/oder der nach hinten zeigende Abschnitt angrenzend an das Hinterrad bereitgestellt wird.

9. Fahrzeug nach einem der vorhergehenden Ansprüche, wobei der nach hinten zeigende Abschnitt unterhalb einer Ebene einer oberen Fläche oder Fußplatte der Plattform bereitgestellt wird und/oder der nach hinten zeigende Abschnitt wenigstens einen Teil einer hinteren Seite der Plattform umfasst.

10. Fahrzeug nach einem der vorhergehenden Ansprüche, wobei das wenigstens eine Licht wenigstens eine Leuchtdiode (55, 60) umfasst.

## Revendications

1. Véhicule automoteur ou à propulsion par le pied (5), comprenant une trottinette, dans lequel la trottinette comprend une plateforme ou surface porteuse (70) et au moins une lumière (11), **caractérisé en ce que** :
la au moins une lumière est fournie sur une portion ou extrémité arrière (65) de la plateforme,
la au moins une lumière comprenant au moins un moyen d'éclairage sur une portion arrière gauche de la plateforme et au moins un moyen d'éclairage sur une portion arrière droite de la plateforme, et
les portions arrière des côtés gauche et droit sont agencées à proximité de chaque côté d'une roue arrière de la trottinette (20).

2. Véhicule selon la revendication 1, dans lequel la au moins une lumière est fournie sur l'avant du bord le plus arrière d'une roue arrière du véhicule.

3. Véhicule selon la revendication 2, dans lequel la au moins une lumière est fournie sur l'avant du bord le plus en avant de la roue arrière.

4. Véhicule selon l'une quelconque des revendications 1 à 3, dans lequel la au moins une lumière comprend une lumière de frein.

5. Véhicule selon l'une quelconque des revendications précédentes, dans lequel la trottinette est une trottinette pliable ou microtrottinette.

6. Véhicule selon l'une quelconque des revendications précédentes, dans lequel la au moins une lumière est montée de sorte à être orientée vers l'arrière sur le véhicule.

7. Véhicule selon l'une quelconque des revendications précédentes, dans lequel la portion orientée vers l'arrière comprend une surface de la plateforme orientée vers l'arrière.

8. Véhicule selon l'une quelconque des revendications précédentes, dans lequel la partie orientée vers l'arrière est agencée sur l'avant de la roue arrière, et/ou la portion orientée vers l'arrière est agencée entre la roue arrière et la roue avant, et/ou la portion orientée vers l'arrière est agencée à proximité de la roue arrière.

9. Véhicule selon l'une quelconque des revendications précédentes, dans lequel la portion orientée vers l'arrière est agencée en dessous d'un niveau d'une surface supérieure ou d'une plaque repose-pied de la plateforme, et/ou la portion orientée vers l'arrière comprend au moins une partie d'un côté arrière de la plateforme.

10. Véhicule selon l'une quelconque des revendications précédentes, dans lequel la au moins une lumière comprend au moins une diode émettrice de lumière (55, 60).
